# EUROPEAN PATENT APPLICATION

(11) **EP 1 659 706 A1**
(43) Date of publication of application: **24.05.2006**
(21) Application number: 04292716.0
(22) Date of filing: 17.11.2004
(51) Int. Cl.: H04B 7/08

(54) **Method and system for improving the quality of a radio signal**

(71) Applicant: ALCATEL, 75008 Paris (FR)
(72) Inventor: Halbauer, Hardy, 76275 Ettlingen (DE); Münzner, Roland, 73266 Bissingen/Teck (DE)
(74) Representative: Richardt, Markus Albert

(57) **Abstract**

The invention relates to a method and a system for improving the quality of a radio signal, particularly for systems according to the IEEE 802.16 standard.

In the case of a wireless transmission of radio signals the signals often doesn't reach the receiver in a direct way, but are scattered and reflected at various objects. This leads to the reception of multipath signals with different phases and amplitudes which interfere and decrease the signal quality. In addition, signals from external sources reach the receiver and interfere with the radio signal.

It is suggested that the receiver analyses incoming signals and determines whether the additional signal is a multipath signal or stems from an external source. In the first case a constructive interference of the radio signal with the additional signal is arranged. In the second case the additional signal is subtracted from the radio signal.

The approach improves the signal-to-noise-ratio as well as the signal-to-interference-ratio and enables the use of a particularly short cyclic prefix in the case of of OFDM signals as well as the use of particularly efficient modulation schemes.

## Description

The invention relates to the wireless transmission of radio signals, and particularly of radio signals in the frequency range below 11 GHz. More specifically, the invention relates to a communication system with a base station and a subscriber station, possibly for wireless local area networks and wireless metropolitan area networks such as systems according to IEEE 802.11 and IEEE 802.16.

The wireless transmission of radio signals is generally known. A base station and a subscriber station communicate with each other by exchanging radio signals which might carry digital data. Typical examples are portable telephones telephone provider.

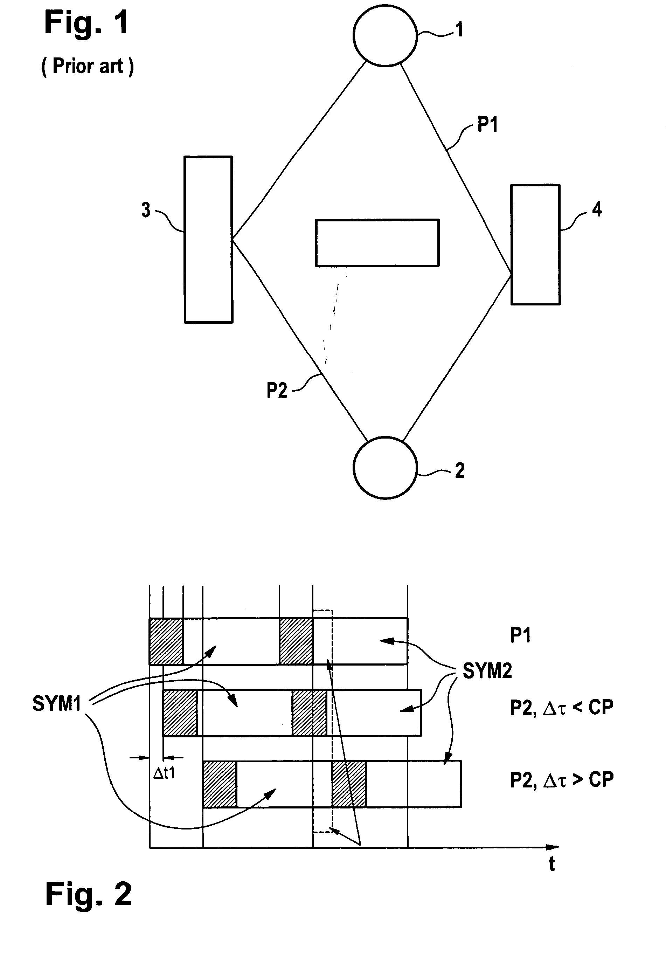

In many cases the communication is governed by a non line of sight (NLOS) environment, where the radio signal is scattered and reflected at various objects. Such an environment is shown in Fig. 1. A transmitter 1 in the form of the customer premises equipment (CPE) sends radio signals to a base station 2. The signals are reflected at objects 3,4 and reach the base station via two different paths P1 and P2. If the radio signal propagating along path P1 is the fastest signal, the signal reaching the base station via path P2 has a relative delay Δτ and possibly a different amplitude and phase depending on the reflection conditions at objects 3 and 4. Such a multipath propagation of individual signals leads to signal distortions at the receiver which increase the bit error ratio or even make decoding of the signal impossible.

If the radio signals are orthogonal frequency division modulated (OFDM) signals, such multipath propagation usually can be compensated, but only at cost of capacity. Each OFDM symbol is preceded by a cyclic prefix (CP). Fig. 2 shows the transmission of symbols SYM1 and SYM2 with respect to time t. When the delay Δτ between the signals propagating along path P1 and along path P2 is shorter than the cyclic prefix (Δτ < CP), then signal parts with the same symbol index overlap only partially, namely in the dashed region. This can be easily equalised. If however Δτ > CP, then parts of the symbol SYM1 overlap with the symbol SYM2 which leads to a significant distortion of the total signal, which can not be equalised. In order to solve the above problem concerning an interference of multipath OFDM signals, the cyclic prefix can be made longer. This well known solution however decreases the spectral efficiency.

Another known solution for the above problem is the use of beamforming. Thereby an array of antenna elements is connected sor. By constructive or destructive interference of the voltage signals generated at each of the antenna ports by the radio signal incident on the antenna array a main lobe and a number (equal to the number of antenna elements minus one) of 'nulls' can be virtually generated by the baseband processing unit within the receive antenna pattern. In case that the received signals show a sufficient spatial separation by the angles of arrival an adaptive algorithm which is conducted in the digital signal processor will adaptiveley adjust the receive antenna pattern in such a way that the main signal receives the beamforming gain of the main lobe whereas the number of placeable nulls are used for cancellation of the strongest other signals. This leads to an improvement of the signal-to-noise ratio (SNR) by the antenna gain of the main lobe as well as to an improvement of the signal-to-interference ratio (SIR) by the suitable placement of nulls in the receive antenna pattern.

It is an object of the invention to provide a system and a method for improving the quality of a radio signal, and particularly to improve the signal-to-noise ratio and the signal-to-interference-ratio in the case of distortions due to multipath propagation and/or due to interference with signals from external sources.

According to the present invention the above mentioned problem is solved by the features of the independent claims. Further embodiments are described by the features of the sub-claims.

According to the invention, the above mentioned problem concerning the method is solved by a method for improving the quality of a first radio signal which is subject to interference with a second radio signal, whereby said method comprises the steps of receiving the first signal and the second signal, analysing whether the second signal is identical in nature to the first signal,
- adding the second signal to the first signal when the second signal is identical in nature to the first signal, whereby the second signal is suitably adapted in amplitude and phase to the first signal in order to arrange a constructive interference,
- subtracting the second signal from the first signal when the second signal is not identical in nature to the first signal, whereby the second signal is suitably adapted in amplitude and phase to the first signal in order to minimize interference contributions to the first signal.

The above mentioned problem concerning the system is solved by a system for improving the quality of a first radio signal which is subject to interference with a second radio signal, whereby the system comprises means for receiving the first signal and the second signal, means for analysing whether the second signal is identical in nature to the first signal, means for suitably adapting the second signal in amplitude and phase to the first signal in order to arrange a constructive interference or to minimize interference contributions to the first signal, and means for adding and/or for subtracting the second signal to the first signal.

The method and the system improve the quality of radio signals. Radio signals should be understood to be electromagnetic waves, preferably those having frequencies below 11 GHz. In most cases the electromagnetic waves are the carriers for transmitted digital data.

The idea of the invention is that the nature of a second signal which might interfere with a first received signal is identified. This means that the method and the system distinguish whether the second signal is a multipath signal or another signal originating from an external interferer.

If the second signal is a multipath signal, then it originates from the same source as the first signal, but reaches the receiver along a different path in comparison to the first signal. In this case the second signal is identical in nature to the first signal which propagates via a different path. Simply speaking, the multipath signals are the same signals but have different phases and amplitudes. If the second signal is not a multipath signal, then it originates at a different source and has different wave characteristics.

The procedure after the analysis of the second signal is as follows: if the second signal is a multipath signal then a constructive interference of the first signal with the second signal is arranged. In such a case, the second signal is added to the first signal with the correct amplitude and phase in order to compensate the phase shift and the attenuation of the multipath signal. If the second signal originates from an external interferer, then the second signal, suitably adjusted in amplitude and phase, is subtracted from the first signal. This is done to minimize interference contributions to the first signal.

When the second signal primarily stems from an external interferer, the first signal is a superposition of a wanted signal and a minor unwanted interference contribution. Correspondingly, the second signal is a superposition of a strong signal coming from the external interferer, and a minor contribution of the wanted signal. It must be borne in mind that the interference contributions of both signals are of the same type: they stem from an interference of the wanted signal with the unwanted signal. For the first signal the wanted signal is the dominant part and for the second signal the unwanted signal is the dominant part. This can be taken into account when the second signal originating mainly from an external interferer is adapted in amplitude and phase to the first signal. In this case the second signal is subtracted from the first signal, whereby the second signal is adapted in amplitude and phase to the interference contribution of the first signal. This minimizes the interference contribution of the first signal and improves the SIR ratio.

The method according to the invention improves the signal-to-noise-ratio and the signal-to-interference-ratio. In the case of OFDM signals the improved SNR/SIR allows for a shorter cyclic prefix and enables the use of a more efficient modulation scheme.

The analysis of the second signal is done by using a beamforming technique. The analysis can be chosen to be a two-step process: in a first step the direction from which the second signal comes from is determined. In a second step the first signal and the second signal are compared with each other, preferably by using a correlation approach.

The first step of determining the direction from which the second signal comes from is done by using a beamforming technique, whereby beamforming can be implemented by an adaptive algorithm. This is an approach basically known to the man skilled in the art. The algorithm directs the beam in the direction of the first signal and detects all incoming (second) signals. The beam is electronically shaped in such a way that the damping in the direction of each second signal is very high or even infinite. This approach is called null steering. The position of the second signal corresponds to the position of the nulls. As a result, the direction of the second signal is known.

This first step can be performed by adaptive algorithms which can direct the beam in the direction of the first signal, and which can generate spectral nulls in all other directions. For example, the algorithms known as MMSE beamformer (minimum mean square error) or MVDR beamformer (minimum variance distortionless response) can be used. The proper choice depends on the characteristics of the radio signal.

The second step of comparing the first signal with the second signal might be done by arbitrary methods, for example by a method which uses a correlation approach.

The radio signal is preferably an OFDM signal. In this case an improved SNR and an improved SIR avoids a longer cyclic prefix and might even allow to use a shorter cyclic prefix and to use a more efficient modulation scheme. This in turn improves the spectral efficiency which is particularly important for a broadband transmission of data. In this respect the invention is particularly useful for broadband wireless local area networks and metropolitan area networks. Examples where the invention can be used are systems according to the IEEE 802.11 standard or to the IEEE 802.16 standard.

The method as described above makes use of an algorithm which can be implemented partially or completely as a computer program. The computer program might have a modular structure, whereby one module analyses the second signal, and whereby one module arranges a constructive interference or a subtraction of the second signal, suitable modified in amplitude and phase, from the first signal. The program can be stored in conventional manner in a storage device such as a hard disk or a CDROM, and might be a firmware, for example the firmware embedded in an EPROM or in a ROM. This computer program product is directly loadable in the internal memory of a digital computer and comprises software code portions for performing the method as disclosed above when said computer program product is running on a computer. The program may also be transferred on a carrier signal through a network, for example the internet. Furthermore, the algorithm may also be implemented in hardware, for example in non volatile memory, such as an ASIC. Hardware accelerated implementations such as code running on an FPGA or DSP (digital signal processor) are also a preferred embodiment of the invention.

The realisation of the algorithm as a computer program, a hardware accelerated or a pure hardware implementation runs on a communication system which has a microprocessor, for example an embedded microprocessor, or a suitable hardware component for the hardware accelerated or non volatile hardware implementation which processes the program. This system firstly comprises a receiver for receiving the first signal and the second signal, whereby the receiver is preferably adapted to receive waves in the frequency range below 11 GHz. Furthermore, the system has means for analysing whether the second signal is identical in nature to the first signal. This means might comprise a microprocessor and a storage device such as an ASIC, FPGA or an EPROM, or only the storage device. In addition, the system has means for adding or subtracting the second signal, suitable modified in amplitude and phase, from the first signal.

This means might also be a microprocessor and a storage device such as an ASIC, FPGA or an EPROM. The communication system might be a base station and/or a subscriber station, for example a WIMAX (Worldwide Interoperability for Microwave Access) system supporting the IEEE 802.16 standard.

These and other aspects of the invention will be apparent from and elucidated with reference to the embodiments described thereafter. It should be emphasized that the use of reference signs shall not be construed as limiting the scope of the invention.

### Brief description of the drawings

- Fig. 1:: shows the multipath propagation of a radio signal in a NLOS environment according to the prior art,
- Fig. 2:: shows the overlap of OFDM symbols of two radio signals according to the prior art,
- Fig. 3:: is a principal sketch of the communication system according to the invention,
- Fig. 4:: is a flowchart illustrating the steps of the method according to the invention.

### Detailed description of the drawings and of the preferred embodiments

In a first preferred embodiment the algorithm for carrying out the invention resides in the modem of a base station or access point. The individual modules of the algorithm are realised as FPGAs being part of the base station modem. The base station or access point is located at a prominent location within the cell and with respect to the locations of the subscriber stations.

The data are carried by OFDM signals according to the IEEE 802.16 standard. The transmitted signals are partially reflected at various objects such as houses, trees, cars and so on. The reflections are such that the modem receives signals from the server which propagate along different paths P1, P2 ... as shown in Fig. 1.

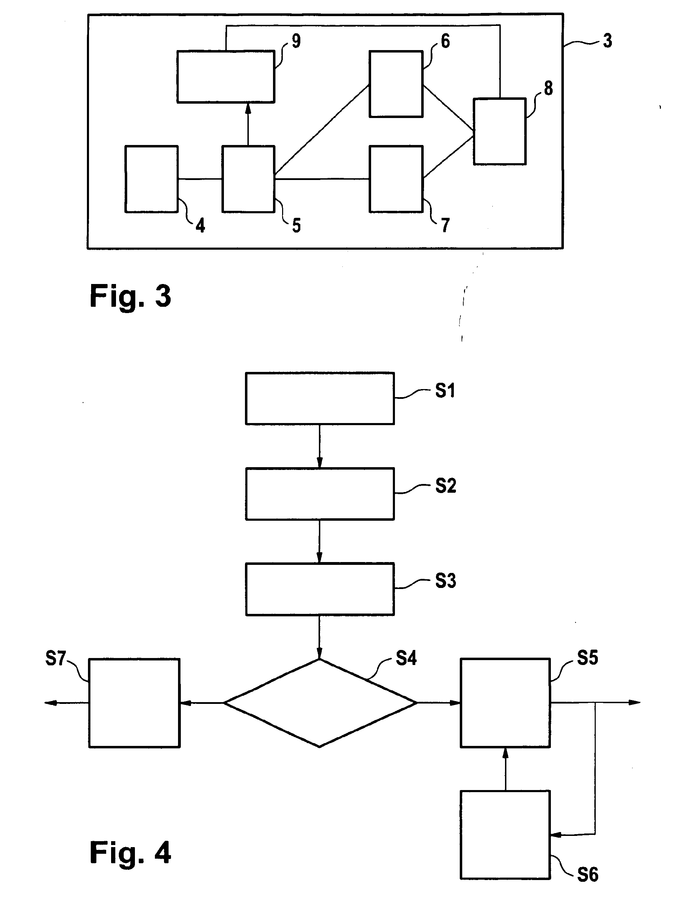

Fig. 3 is a principal sketch of the base station or acess point modem 3. Modem 3 has an antenna array 4 to transmit and to receive an OFDM modulated first radio signal and at least one second signal. The antenna array 4 transfers the complete signal, comprising the first signal and the second signal, via a dedicated entity for frequency down conversion and analogue to digital conversion to a FPGA 5 which provides a logic to perform the adaptive beamforming and to extract the first as well as the second signal. The FPGA 5 further provides the logic to analyse whether the second signal is identical in nature to the first signal. As the FPGA 5 manages to distinguish between the first and the second signal, the two signals are transferred to FPGAs 6 and 7 to arrange addition or subtraction of the two signals in mixer 8. An addition leading to constructive interference is arranged when the first signal and the second signal are multipath signals. A subtraction is arranged by mixer 8 when the second signal stems from an external interferer. The mode of operation of mixer 8 is determined by a microprocessor 9. Microprocessor 9 itself is informed by the FPGA 5 whether the first and the second signal are multipath signals or not.

A second preferred embodiment is a computer modem being part of a mobile laptop which acts as a subscriber station and sends radio signals to a server which is located in an office. The laptop might be located in a conference room where data are presented to an audience, and whereby the data are received from a server in a building of an industrial complex.

The data are carried by OFDM signals according to the IEEE 802.16 standard. The transmitted signals cross walls and are partially reflected at various objects such as walls, furniture and so on. The reflections are such that the modem receives signals from the server which propagate along different paths P1, P2 ... as shown in Fig. 1.

Fig. 3 is a principal sketch of the modem 3 which can be a PCI card which is put into a slot of the mainboard. Modem 3 has an antenna array 4 to transmit and to receive an OFDM modulated first radio signal and at least one second signal. The antenna array 4 transfers the complete signal received by the antenna array, comprising the first signal and the second signal, via a dedicated entity for frequency down conversion and analogue to digital conversion to a FPGA 5 which provides a logic to perform the adaptive beamforming and extract the first as well as the second signal. The FPGA 5 further provides a logic to analyse whether the second signal is identical in nature to the first signal. A FPGA 5 manages to distinguish between the first and the second signal, the two signals are transferred to FPGA 6 and 7 to arrange addition or subtraction of the two signals in mixer 8. An addition leading to constructive interference is arranged when the first signal and the second signal are multipath signals. A subtraction is arranged by mixer 8 when the second signal stems from an external interferer. The mode of operation of mixer 8 is determined by a microprocessor 9. Microprocessor 9 itself is informed by FPGA 5 whether the first and the second signal are multipath signals or not.

The flowchart according to Fig. 4 illustrates the steps which are performed by the logic of the modem.

In step S1 the first signal and the second signal are received. The beam forming algorithm MMSE is used by FPGA 5 in the way that the beam pattern is adjusted to maximum Rx (receiver) power and that null steering is performed.

In step S2 the DOA (direction of arrival) of the interfering signals are derived from the position of the nulls.

In step S3, for all nulls a beam pattern for the detection of the second signal is generated. This enables a selective reception of a second signal. The first signal and the second signal are transferred as an input to FPGA 5.

In step S4 the interfering signal is analysed by means of a correlation approach. If the signal is an external interferer, the interfering signal is subtracted from the first signal in step S5, whereby the decision is directed by an adaptive algorithm in step S6. The result is an improved output signal after step S5.

If the interfering signal is not an external interferer but a delayed multipath signal, this signal is shifted, scaled and added to the first signal in step S7. The result is an improved output signal after step S7.

### List of reference numerals

- 01: transmitter
- 02: receiver
- 03: modem
- 04: antenna array
- 05: FPGA
- 06: FPGA
- 07: FPGA
- 08: mixer
- 09: microprocessor

- S1-S7: steps 1 to 7 of the method
- P1: first propagation path
- P2: second propagation path
- SYM1: OFDM symbol n
- SYM2: OFDM symbol n+1
- CP: cyclic prefix

## Claims

1. Method for improving the quality of a first radio signal which is subject to interference with a second radio signal, said method comprising the steps of:
a) receiving the first signal and the second signal,
b) analysing whether the second signal is identical in nature to the first signal,
c) adding the second signal to the first signal when the second signal is identical in nature to the first signal, whereby the second signal is suitably adapted in amplitude and phase to the first signal in order to arrange a constructive interference, and
d) subtracting the second signal from the first signal when the second signal is not identical in nature to the first signal, whereby the second signal is suitably adapted in amplitude and phase to the first signal in order to minimize interference contributions to the first signal.

2. Method according to claim 1, whereby the analysis comprises the step of determining the direction from which the second signal comes from.

3. Method according to claim 2, whereby the direction is determined by means of beamforming.

4. Method according to claim 2, whereby beamforming is performed by means of an adaptive algorithm.

5. Method according to claim 4, whereby the adaptive algorithm is MMSE or MVDR.

6. Method according to claim 1, whereby the analysis comprises a comparison of the first signal with the second signal by means of a correlation approach.

7. Method according to claim 1, whereby in the case of subtracting the second signal from the first signal the second signal is adapted in amplitude and phase to the interference contribution of the first signal.

8. Method according to claim 1, whereby the first signal is an OFDM signal.

9. Method according to claim 1, whereby the first signal is a signal according to the IEEE 802.16 standard.

10. Method according to claim 1, whereby at least one of the steps a) to d) is performed by a computer program, a hardware accelerated or a pure hardware implementation.

11. Computer program product, directly loadable in the internal memory of a digital computer, comprising software code portions for performing the method according to claim 9 when said product is running on a computer.

12. Communication system for improving the quality of a first radio signal which is subject to interference with a second radio signal, the system comprising:
a) means for receiving the first signal and the second signal,
b) means for analysing whether the second signal is identical in nature to the first signal,
c) means for suitably adapting the second signal in amplitude and phase to the first signal in order to arrange a constructive interference or to minimize interference contributions to the first signal.
d) means for adding and/or for subtracting the second signal to/from the first signal.

13. Communication system according to claim 11, whereby the system is a subscriber station and/or is a base station.

14. Communication system according to claim 11, whereby the subscriber station is adapted to receive radio signals according to the IEEE 802.16 standard.
